# EUROPEAN PATENT APPLICATION

(11) **EP 2 452 925 A1**
(43) Date of publication of application: **16.05.2012**
(21) Application number: 10797162.4
(22) Date of filing: 07.07.2010
(51) Int. Cl.: C03B 5/167, C03B 3/02, C03B 5/235

(54) **GLASS MELTING FURNACE, MOLTEN GLASS MANUFACTURING METHOD, GLASS PRODUCT MANUFACTURING DEVICE, AND GLASS PRODUCT MANUFACTURING METHOD**

(30) Priority: 08.07.2009 JP 2009161841
(71) Applicant: Asahi Glass Company, Limited, Tokyo 100-8405 (JP)
(72) Inventor: SAKAMOTO, Osamu, Tokyo 100-8405 (JP); TANAKA, Chikao, Tokyo 100-8405 (JP); MIYAZAKI, Seiji, Tokyo 100-8405 (JP); OHKAWA, Satoru, Tokyo 100-8405 (JP)
(74) Representative: Müller-Boré & Partner Patentanwälte
(86) International application number: PCT/JP2010/061561
(87) International publication number: WO 2011/004851

(57) **Abstract**

The present invention provides a glass melting furnace, a process for producing molten glass, an apparatus for producing a glass product and a process for producing a glass product, which are capable of preventing deterioration of the quality of molten glass caused by deposition of particles floating in the furnace on a furnace wall. In the melting tank 12 of the present invention, a flue 16 is disposed substantially at the center of a ceiling wall 14, and around this flue 16, eight first heating units (combinations of inlets for glass material particles and heating means to form a gas phase zone to convert the glass material particles to liquid glass particles) 18, 18··· are disposed. Therefore, particles floating in the furnace (floating particles) 24, 24 ··· are suctioned by a suction power of the flue 16 and discharged out of the furnace without being directed to a surrounding furnace wall. Thus, by this melting tank 12, the deposition amount of floating particles 24, 24 ··· deposited on the furnace wall 44 is drastically reduced, and it is thereby possible to prevent damages to the furnace wall and deterioration of the quality of glass melt G caused by the deposition of the floating particles 24, 24 ··· on the furnace wall.

## Description

### TECHNICAL FIELD

The present invention relates to a glass melting furnace for producing molten glass by forming liquid glass particles from glass material particles in a high temperature gas phase atmosphere, a process for producing molten glass by means of such a glass melting furnace, an apparatus for producing a glass product provided with such a melting furnace, and a process for producing a glass product by using such a production process.

### BACKGROUND ART

Patent Documents 1 and 2 disclose, as a glass melting furnace for producing molten glass by melting and collecting glass material particles in a high temperature gas phase atmosphere, a glass melting furnace provided with an inlet for glass material particles at a ceiling portion of a glass melting furnace and a heating means to form a high temperature gas phase atmosphere to melt the glass material particles.

This glass melting furnace is an apparatus whereby glass material particles introduced into the furnace from an inlet for glass material particles, are melted in a high temperature gas phase atmosphere heated by a heating means, to form liquid glass particles, the liquid glass particles are collected at a bottom of the glass melting furnace to form a glass melt, and the glass melt is temporarily retained at the bottom of the glass furnace and then discharged. Further, such a method for producing molten glass is known as an in-flight melting method. It is said that according to this in-flight melting method, as compared with a melting method by means of a conventional Siemens type furnace, the consumption energy in the glass melting step can be reduced to a 1/3 level, and melting in a short time becomes possible, whereby it is possible to reduce the size of the melting furnace, omit a regeneration chamber, improve the quality, reduce CO₂ and shorten the time for change of the type of glass. Such an in-flight melting method for glass has attracted attention as an energy-saving technique.

Meanwhile, as glass material particles to be introduced from an inlet for glass material particles, it is common to employ ones granulated to a particle size of at most 1 mm. Glass material particles introduced into a glass melting furnace are respectively melted to form liquid glass particles during falling (flying) in a high temperature gas phase atmosphere, and the liquid glass particles will fall downward and will be collected at the bottom of the glass melting furnace to form a glass melt. Liquid glass particles formed from such glass material particles are ones which may be referred to as glass liquid droplets. In order to let liquid glass particles be formed from glass material particles in a short time in the high temperature gas phase atmosphere, the particle size of the glass material particles is required to be small as mentioned above. Further, in a usual case, individual liquid glass particles formed from individual glass material particles are required to be particles having substantially the same glass composition.

When both glass material particles and liquid glass particles are small particles, decomposed gas components which are generated when the glass material particles become liquid glass particles, will not be trapped inside of the formed liquid glass particles, and most of them will be released out of the liquid glass particles. Therefore, there is no substantial possibility that bubbles will form in the glass melt formed by collection of liquid glass particles.

On the other hand, the respective glass material particles are particles wherein the constituting material components are substantially uniform, and the glass compositions of the respective liquid glass particles to be formed therefrom are also mutually uniform. As the difference in the glass composition among liquid glass particles is little, there is no substantial possibility that a portion different in the glass composition will form in the glass melt formed by accumulation of many liquid glass particles. Therefore, a homogenizing means to homogenize the glass composition of a glass melt which has been required for a conventional glass melting furnace, is not required in most cases in the in-flight melting method. Even if it happens that a small number of liquid glass particles are different in the glass composition of the rest of majority liquid glass particles, since liquid glass particles are particles having a small particle size, the region different in the glass composition in the glass melt is small, and such a different region will be readily homogenized and will disappear in a short time. Thus, by the in-flight melting method, it is possible to reduce the thermal energy required for homogenizing the glass melt and to shorten the time required for such homogenization.

The glass melting furnace in Patent Document 1 is provided with a plurality of arc electrodes, and/or an oxygen combustion nozzle, as a heating means to form the high temperature gas phase atmosphere, and a high temperature gas phase atmosphere of at least about 1,600°C is formed in the furnace by the thermal plasma arc formed by the plurality of arc electrodes and/or by an oxygen combustion flame (flame) by the oxygen combustion nozzle. By introducing the glass material particles into this high temperature gas phase atmosphere, the glass material particles are changed to liquid glass particles in the high temperature gas phase atmosphere. Further, as the glass material particles to be used in Patent Document 1, ones having a particle size of at most 0.5 mm (weight average) are used from such viewpoints that they can be changed to liquid glass particles in a short time, and release of generated gas is easy. Further, ones having a particle size of at least 0.01 mm (weight average) are used from the viewpoints of avoiding an increase of the costs due to fine pulverization of glass material particles and reduction of the change in the glass composition among liquid glass particles to be formed.

On the other hand, the glass melting furnace in Patent Document 2 is provided with an oxygen burner attached downward on a ceiling wall of a glass melting furnace, as a heating means. To this oxygen burner, a gas supply system and a material supply system are connected so that an assisting gas having an oxygen concentration of at least 90 vol% and glass materials are supplied. Thus, according to this glass melting furnace, while forming a flame downward by combustion by the oxygen burner, glass material particles are supplied downwardly into the flame from the oxygen burner, to form liquid glass particles in the flame, and the formed liquid glass particles are collected at the furnace bottom immediately below the flame, to form a glass melt. This oxygen burner is disposed to pass through a wall surface on the upstream side of the ceiling wall of the glass melting furnace. Further, the glass melting furnace in Patent Document 2 is provided with an outlet to discharge out of the furnace an exhaust gas generated during melting of the glass material. This outlet is formed on a wall surface on a downstream side of the ceiling wall of the glass melting furnace and is connected to a suction fan, so that by working the suction fan, the exhaust gas in the glass melting furnace is suctioned into the flue and then discharged.

The molten glass of about 1,600°C produced by the glass melting furnace in Patent Document 1 or 2, is supplied to a temperature conditioning tank or a refining tank from the glass melting furnace, and cooled here to a temperature for forming (at a level of about 1,000°C in the case of soda lime glass). And, this molten glass is supplied to a forming means for a glass product, such as a float bath, a fusion forming machine, a roll out forming machine, a blow forming machine or a press molding machine, and formed here into glass products of various shapes. And, a formed glass product is cooled to about room temperature by an annealing means and then made into a desired glass product, if necessary, after via a cutting step by a cutting means and/or other subsequent steps.

### PRIOR ART DOCUMENTS

### PATENT DOCUMENTS

Patent Document 1: JP-A-2007-297239
Patent Document 2: JP-A-2008-120609

### DISCLOSURE OF INVENTION

### TECHNICAL PROBLEM

Whereas, in the in-flight melting facilities as disclosed in Patent Documents 1 and 2, some of glass material particles or melted glass particles are likely to float in the form of a mist and ascend as carried by an exhaust gas stream, and then suctioned into the flue and discharged. At that time, particles floating in the furnace are not all suctioned into the flue and discharged, but some particles tend to deposit on the furnace wall. The particles deposited on the furnace wall are likely to corrode the furnace material of the furnace wall, and a reaction product of such particles with the furnace material is likely to be peeled off from the furnace wall and dropped on the glass melt surface, thus leading to a problem of deteriorating the quality of molten glass. Especially in the facility disclosed in Patent Document 2, the distance from the material-melting zone by the oxygen burner to the flue is long, whereby the above problem was likely to be frequented.

The above particles which happen to be floating as astrayed from such a route that glass material particles are converted to liquid glass particles and collected at the furnace bottom, are considered to include e.g. non-melted glass material particles, melted liquid glass particles or solidified particles thereof, particles during conversion of glass material particles to liquid glass particles (such as particles having a part of material in the glass material particles (such as a carbonate) decomposed, particles having their surface melted or solidified particles thereof, etc.), and particles composed of fragmented products of these particles. Further, in a case where particles of glass cullet are used in combination with glass material particles for the production of molten glass, some of glass cullet particles introduced into the melting furnace may become floating particles without reaching the glass melt surface. For example, fine glass cullet particles, melted particles of glass cullet particles, particles having once melted glass cullet particles solidified again, particles composed of a fragmented product of these particles, etc. are considered to become floating particles. Further, it is considered that airborne droplets of liquid glass to be formed at the time when dropped glass cullet particles, etc. collide against the surface of glass melt, or their solidified product, may become floating particles.

Such particles not reaching the surface of glass melt at the furnace bottom, derived from these glass material particles, glass cullet particles, etc. will hereinafter be referred to as floating particles.

The present invention has been made under these circumstances, and it is an object of the present invention to provide a glass melting furnace, a process for producing molten glass, an apparatus for producing a glass product and a process for producing a glass product, which are capable of preventing deterioration of the quality of molten glass caused by deposition of floating particles on the furnace wall.

### SOLUTION TO PROBLEM

In order to accomplish the above object, the present invention provides a glass melting furnace for converting glass material particles to liquid glass particles in a gas phase atmosphere in the glass melting furnace, collecting the liquid glass particles at a bottom of the glass melting furnace to form a glass melt and discharging the glass melt, which comprises a flue formed through a ceiling of the glass melting furnace, a plurality of inlets for glass material particles provided downward on an upper furnace wall in the glass melting furnace and disposed around the flue in a planar view, a heating means formed for every one of the plurality of inlets for glass material particles, to form a gas phase zone below the inlets for glass material particles, to convert the glass material particles to liquid glass particles, a furnace bottom to collect the liquid glass particles to form a glass melt, and a discharge outlet to discharge the glass melt.

Further, in order to accomplish the above object, the present invention provides a process for producing molten glass, which comprises producing molten glass by means of the glass melting furnace of the present invention.

According to the glass melting furnace and the process for producing molten glass of the present invention, a flue is disposed at a ceiling of the glass melting furnace, and a plurality of inlets for glass material particles are disposed around this flue, whereby floating particles formed in a gas phase zone below the inlets for glass material particles, or floating particles formed in the vicinity of the gas phase zone will be efficiently suctioned into the flue and discharged to the outside, without directed to the furnace wall of the glass melting furnace. It is thereby possible to prevent damages to the furnace wall or deterioration of the quality of molten glass caused by deposition of floating particles on the furnace wall, since the deposition amount of floating particles deposited on the furnace wall is drastically reduced.

The above gas phase zone is a gas phase zone in a high temperature atmosphere state which is capable of converting glass material particles passing therethrough to liquid glass particles. This gas phase zone is formed below every inlet for glass material particles. Therefore, a heating means to form such a gas phase zone is also provided for every inlet of glass material particles.

Here, at the time of subjecting the glass material particles to in-flight melting, glass material particles introduced from inlets for glass material particles are passed through and melted in the gas phase zone formed below the inlets for glass material particles. Melted glass material particles become liquid glass particles, which fall downward and become glass melt, which is temporarily retained and then supplied to the downstream side. The upper furnace wall of the glass melting furnace mentioned here is meant for the ceiling of the glass melting furnace and a range of a side wall within 1 m from the inner wall of the ceiling.

Further, according to the present invention, in the glass melting furnace, it is preferred that in a planar view, the plurality of inlets for glass material particles are disposed concentrically with the flue at the center.

According to the present invention, the floating particles formed in the gas phase zone below each inlet for glass material particles, can be uniformly suctioned and removed by the flue.

Further, according to the present invention, the heating means to form the gas phase zone is preferably at least one of an oxygen combustion burner to generate an oxygen combustion flame and a multiphase arc plasma generator constituted by at least one pair of electrodes to generate thermal plasma.

According to the present invention, in the case of an oxygen combustion flame by the oxygen combustion burner, it is possible to form a high temperature atmosphere of about 2,000°C, and in the case of thermal plasma, it is possible to form a high temperature atmosphere of from 5,000 to 20,000°C. Accordingly, falling glass material particles can be converted to liquid glass particles in a short time. Further, the oxygen combustion burner and the multiphase arc plasma generator may be installed alone, or both may be used in combination. Further, as the oxygen combustion burner to be used as a heating means to form the gas phase zone, it is possible to use a burner in such a form that inlets for glass material particles are integrated thereto.

Further, according to the present invention, the glass melting furnace is preferably constructed to have a substantially cylindrical shape with its central axis in a vertical direction, wherein in a planar view, the flue is formed substantially at its center.

According to the present invention, the negative pressure in the furnace becomes substantially uniform over the entire region in the furnace, whereby floating particles in the furnace can be suctioned and removed more constantly.

Further, according to the present invention, the glass melting furnace is preferably provided with a plurality of inlets for glass cullet pieces to introduce glass cullet pieces, provided downward on the furnace wall of the glass melting furnace and disposed at prescribed distances to enclose the entirety of the plurality of inlets for glass material particles.

According to the present invention, glass cullet pieces are permitted to fall from the plurality of inlets for glass cullet pieces, and by the flow of such falling glass cullet pieces, the entire gas phase zone below each inlet of glass material particles is enclosed, and the high temperature gas phase zone and the furnace wall are partitioned, and at the same time, the above floating particles generated in the high temperature gas phase zone and directed to the furnace wall are captured as deposited on the surface of falling glass cullet pieces and fallen. It is thereby possible to certainly prevent deposition of floating particles on the furnace wall. Further, in the present invention, it is possible to preheat glass cullet pieces and to stabilize the flame by the descending stream. Further, the glass melting furnace is preferably provided with a heating means (hereinafter referred to also as a second heating means) to form a gas phase zone (hereinafter referred to also as a second gas phase zone) to heat glass cullet pieces, below the inlets for glass cullet pieces. Such a second heating means may be provided adjacent to an inlet for glass cullet pieces, whereby it is possible to heat descending glass cullet pieces thereby to contribute to melting of glass cullet pieces. It is preferred that glass cullet pieces becomes glass particles having at least their surface liquefied in this second gas phase zone and then reach the surface of glass melt.

Further, according to the present invention, in the glass melting furnace, the plurality of inlets for glass cullet pieces are disposed, in a planar view, concentrically with the flue at the center.

Further, the inlets for glass cullet pieces of the present invention are preferably provided to introduce glass cullet pieces having a short diameter (a) being 0.1 mm<a<50 mm.

According to the present invention, with respect to the size of glass cullet pieces, their short diameter has been defined on such a basis that it is unlikely that glass cullet pieces themselves become floating particles due to an air stream in the glass melting furnace and in consideration of the efficiency for handling to recover glass cullet pieces in the production step for a glass product or from a market, to store them and to transport them to the inlets for glass cullet pieces.

In the present invention, it is preferred that glass cullet pieces having such a short diameter (a) are introduced into the furnace from the inlets for glass cullet pieces, and the falling glass cullet pieces are heated in the second gas phase formed by the second heating means.

Further, in the present invention, the glass cullet pieces having the above short diameter (a) are defined to be ones which remain on a sieve with a mesh opening size of 0.1 mm and pass through a sieve with a mesh opening size of 50 mm. Thus, by the glass melting furnace of the present invention, it is possible to introduce glass cullet pieces which by themselves are less likely to be scattering, together with glass material particles, into the glass melting furnace without preheating, and then melted. It is thereby suitable as a large scale melting furnace suitable for the production of a glass product at a production rate of a few tens tons/day or a few hundreds tons/day.

Further, a gas supply section may be provided to supply a part of exhaust gas from the flue to glass cullet pieces prior to being introduced from the inlets for glass cullet pieces, to preheat the glass cullet pieces.

According to the present invention, the glass cullet pieces to be introduced from the inlets for glass cullet pieces, are preheated by utilizing a high temperature gas discharged from the flue, whereby it is possible to maintain the inside of the glass melting furnace at a high temperature and promote the melting of the glass cullet pieces.

Further, in order to accomplish the above object, the present invention provides an apparatus for producing a glass product, which comprises the glass melting furnace of the present invention, a forming means for forming molten glass, installed on a downstream side of the discharge outlet of the glass melting furnace, and an annealing means to anneal glass after the forming.

Further, in order to accomplish the above object, the present invention provides a process for producing a glass product, which comprises a step of producing molten glass by the process for producing molten glass of the present invention, a step of forming the molten glass, and a step of annealing glass after the forming.

### ADVANTAGEOUS EFFECTS OF INVENTION

As described in the foregoing, according to the glass melting furnace and the process for producing molten glass of the present invention, it is possible to prevent damages to the furnace wall or the flue and deterioration of the quality of molten glass, caused by deposition of floating particles on the furnace wall, and thus, it is possible to produce molten glass having good quality over a long period of time.

Further, according to the apparatus for producing a glass product and the process for producing a glass product of the present invention, it is possible to produce molten glass having good quality by the apparatus and process for producing molten glass of the present invention, and thus, it is possible to produce a glass product having a good quality for a long period of time.

### BRIEF DESCRIPTION OF DRAWINGS

Fig. 1 is a vertical cross-sectional view of a glass melting furnace in a first embodiment to constitute the apparatus for producing a glass product of the present invention.
Fig. 2 is a sectional plan view of the main part of the glass melting furnace shown in Fig. 1.
Fig. 3 is a vertical cross-sectional view of a glass melting furnace in a second embodiment to constitute the apparatus for producing a glass product of the present invention.
Fig. 4 is a sectional plan view of the main part of the glass melting furnace shown in Fig. 3.
Fig. 5 is a flow chart illustrating an embodiment of the process for producing a glass product of the present invention.

### DESCRIPTION OF EMBODIMENTS

Now, preferred embodiments of the glass melting furnace, the process for producing molten glass, the apparatus for producing a glass product and the process for producing a glass product according to the present invention will be described with reference to the accompanying drawings.

In the glass melting furnaces shown in the drawings, a heating means (hereinafter referred to also as a first heating means) to form a gas phase zone (hereinafter referred to also as a first gas phase zone) to convert glass material particles to liquid glass particles, is composed of an oxygen combustion burner.

The first gas phase zone to convert glass material particles to liquid glass particles is constituted by a high temperature zone in the flame and in the vicinity of the flame of the oxygen combustion burner. An inlet for glass material particles to supply glass material particles to the gas phase zone is integrated with the oxygen combustion burner, and in the vicinity of the outlet of the oxygen combustion burner, a pipe to supply a combustion gas, a pipe to supply oxygen and a pipe to supply glass material particles are co-axially constructed. Such a combination of an inlet for glass material particles and an oxygen combustion burner is referred to as a first heating unit. Glass material particles, liquid glass particles formed by melting thereof and particles during conversion from glass material particles to liquid glass particles (such as particles of which only the surface portion is liquid glass) will be represented by particles 22 in the drawings of the following embodiments, and will be referred to as glass material particles, etc. 22 in the following description.

On the other hand, in the second gas phase zone to convert glass cullet pieces to glass particles having at least their surface liquefied, the inlet for glass cullet pieces and the oxygen combustion burner are separate bodies, and a pipe to supply glass cullet pieces to the second gas phase zone and the oxygen combustion burner are disposed close to the upper furnace wall. Such a combination of the inlet for glass cullet pieces and the oxygen combustion burner will be referred to as a second heating unit.

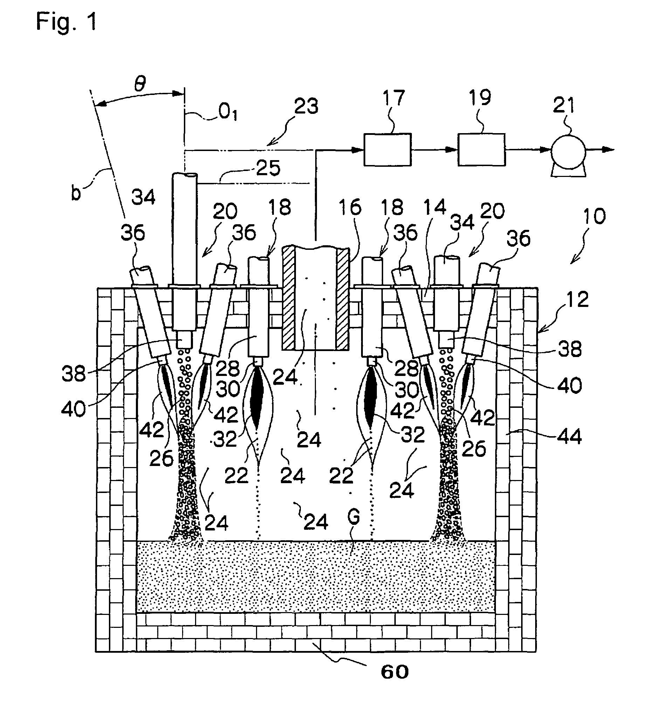

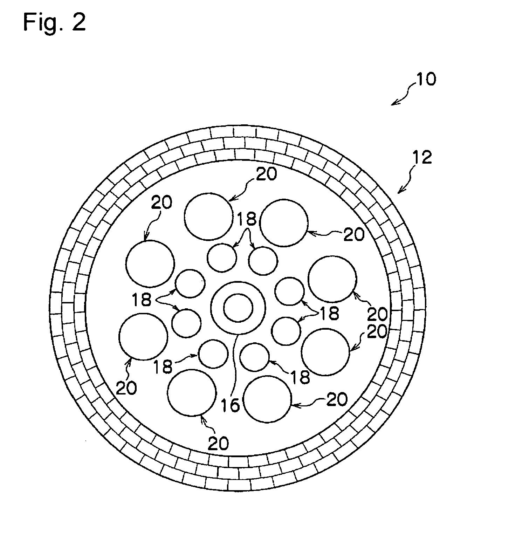

Fig. 1 is a vertical cross-sectional view of a glass melting furnace 10 in a first embodiment to constitute the apparatus for producing a glass product of the present invention, and Fig. 2 is a sectional plan view of the main part excluding the ceiling portion of the glass melting furnace 10. Further, in Fig. 2, a first heating unit 18 and a second heating unit 20 which will be described in detail, are simply shown by a symbol

The glass melting furnace 10 comprises a melting tank 12 and an outlet (not shown) as a discharge outlet for glass melt G, and the melting tank 12 and the outlet are constructed by well-known refractory bricks. Further, the melting tank 12 is constructed to be substantially cylindrical with the central axis in a vertical direction, and on its ceiling wall 14, in a planar view in Fig. 2, substantially at its center portion, a flue 16 is provided in a vertical direction through the ceiling wall 14. To this flue 16, a suction fan 21 is connected via a cooling device 17 and a dust collector 19, so that by working the suction fan 21, exhaust gas in the melting tank 12 is suctioned into the flue 16. This exhaust gas is cooled to a prescribed temperature by the cooling device 17, and then, a dust in the exhaust gas is removed by the dust collector 19, and then discharged to the outside by the suction fan 21. Here, the flue 16 is not necessarily disposed substantially at the center portion of the ceiling wall 14, but as described hereinafter, it is preferably disposed substantially at the center portion of the ceiling wall 14 in order to make the pressure (negative pressure) in the melting tank 12 to be substantially uniform over the entire region of the melting tank 12.

Further, by utilizing a part of exhaust gas discharged from the flue 16, a gas supply section 23 may be provided to supply the part of exhaust gas to glass cullet pieces 26 prior to being introduced from the second heating unit 20, to preheat the glass cullet pieces. In such a case, before leading the exhaust gas from the flue 16 to the cooling device 17, as shown by a two-dot chain line in Fig. 1, an exhaust gas system 25 is turned to a glass cullet pieces-introducing tube 34 of the second heating unit 20. And, the exhaust gas supplied to the glass cullet pieces-introducing tube 34 and contributed to preheating of glass cullet pieces 26 is led, as the case requires, from the glass cullet pieces-introducing tube 34 to the cooing device 17, and a dust in the exhaust gas is removed by the dust collector 19 and then discharged to the outside by the suction fan 21. By such a system, the glass cullet pieces 26 introduced from the second heating unit 20 can be preheated by utilizing the high temperature gas discharged from the flue 16, whereby it is possible to maintain the temperature in the glass melting furnace 10 at a high temperature and to accelerate melting of the glass cullet pieces 26.

Further, on the ceiling wall 14 as an upper furnace wall of the melting tank 12, eight first heating units 18, 18 ··· and eight second heating units 20, 20 ··· are disposed, thereby to form eight first gas phase zones to convert glass material particles to liquid glass particles and eight second gas phase zones to melt glass cullet pieces, in the gas phase atmosphere in the furnace. An oxygen combustion burner in each unit is provided through the ceiling wall 14 so that the flame is directed downward.

The eight first heating units 18, 18 ··· are disposed at equal distances concentrically with the flue 16 (central axis O) at the center, in a planar view in Fig. 2. Further, the eight second heating units 20, 20 ··· are disposed at equal distances concentrically with the flue 16 at the center, to enclose the eight first heating units 18, 18 ···. Further, the first heating units 18 and the second heating units 20 may be formed on an upper side wall of the melting tank 12 instead of on the ceiling wall 14, within the scope of the present invention. In a case where the first heating units 18 and the second heating units 20 are formed on a side wall, they are formed on the side wall at a height of up to 1 m in a vertical direction from the inner wall of the ceiling wall 14 of the melting tank 12. That is, if the first heating units 18 and the second heating units 20 are formed at a position exceeding 1 m in a vertical direction from the inner wall of the ceiling wall 14 of the melting tank 12, the vertical distance of the first heating units 18 from the glass melt surface tends to be too small, and an angle to a horizontal direction becomes small, and glass particles are obliged to be blown to the opposite wall surface, thus leading to corrosion of the furnace wall and accompanying glass contamination, and from the second heating units 20, glass cullets are likely to be dropped on the glass melt G without being sufficiently preheated. The first heating units 18 and the second heating units 20 are preferably formed at a height up to 90 cm, more preferably at a height of up to 50 cm, in a vertical direction from the inner wall of the ceiling wall 14 of the melting tank 12.

Further, the number of the first heating units 18 is not limited to 8 and may be at least 2, so long as they are capable of enclosing the flue 16. Likewise, the number the second heating units 20 is also not limited to 8 and may be at most 7 or at least 9, so long as it is possible to form the formation to enclose the flow of glass material particles by the flow of falling glass cullet pieces as described later. Further, the disposition form of the first heating units 18 is not limited to the above-mentioned concentric form, and may be a form to enclose the flue 16, e.g. a disposition form along a triangular form, a quadrangular form or an elliptical form. However, the above-mentioned concentric disposition form is preferred in order to uniformly suction and remove by the flue 16 floating particles 24, 24 derived from glass material particles, etc. 22, 22 ···, by the respective first heating units 18, 18 ···, Likewise, the disposition form of the second heating units 20 is also not limited to the above-mentioned concentric form and may be a disposition form along e.g. a triangular form, a quadrangular form or an elliptical form. However, the above-mentioned concentric disposition form is preferred in order to uniformly heat, by the heat of the first heating units 18, 18 ···, glass cullet pieces 26, 26 ··· introduced from the second heating units 20,20 ···.

Further, as mentioned above, this melting tank 12 is constructed to be substantially cylindrical, and in a planar view, the flue 16 is formed substantially at the center, whereby a negative pressure in the furnace becomes substantially uniform over the entire region in the furnace, and accordingly, it is possible to suction and remove floating particles 24, 24 ··· in the furnace constantly from the flue 16.

In each of the melting tank 12 and the outlet, the glass melt G is retained, and it is so constructed that the glass melt G produced in the melting tank 12 is permitted to flow to a downstream via the outlet.

As a first heating unit 18, an oxygen combustion burner 28 having an inlet for glass material particles integrated therewith is used.

This oxygen combustion burner 28 is an oxygen combustion burner known as a burner for heating inorganic powder and having material, fuel and assisting gas supply nozzles properly disposed. Nozzles 30 at the forward end of the oxygen combustion burner 28 are a fuel supply nozzle, a primary combustion assisting gas supply nozzle, a glass material supply nozzle and a secondary combustion assisting gas supply nozzle sequentially arranged from the center to the outer periphery concentrically as a whole. From the nozzles 30, a flame 32 is ejected downward, and glass material particles are supplied into this flame 32 (i.e. the first gas phase zone) from the glass material supply nozzle by gas transportation or mechanical transportation. It is thereby possible to convert glass material particles to liquid glass particles certainly and in a short time. Here, although not shown in the drawings, to this oxygen combustion burner 28, a glass material particles-supply system to supply glass material particles to the glass material supply nozzle, a fuel supply system to supply a fuel to the fuel supply nozzle and a gas supply system to supply an assisting gas to the primary combustion assisting gas supply nozzle and to the secondary combustion assisting gas supply nozzle, are connected.

Thus, in a case where the oxygen combustion burner 28 having the inlet for glass material particles integrated therewith is applied like this, such an oxygen combustion burner 28 serves as an inlet for glass material particles, and therefore, an inlet for glass material particles is not required to be separately provided. However, an inlet for glass material particles to introduce glass material particles to the flame 32 of the oxygen combustion burner 28 may be separately provided adjacent to the oxygen combustion burner 28.

Further, the first heating means to form the first gas phase zone is not limited to the oxygen combustion burner 28, and a multiphase arc plasma generator constituted by at least one pair of electrodes to generate thermal plasma, may be provided on a wall surface of the melting tank 12, or both the oxygen combustion burner 28 and the multiphase arc plasma generator may be provided in the melting tank 12. Further, the temperature of the flame 32 of the oxygen combustion burner 28 or the thermal plasma is preferably set to be at least 1,600°C which is at least the melting temperature of silica sand in order to quickly gasify and disperse the gas component contained in the glass material particles, etc. 22 and to let the vitrification reaction proceed. It is thereby possible to quickly gasify and disperse the glass material particles, etc. 22 in the first gas phase zone by the flame 32 and/or thermal plasma, and as they are heated at a high temperature, they are converted to liquid glass particles, which will land on the surface of glass melt G in the melting tank 12. And, glass melt formed by collection of liquid glass particles, will be continuously heated by the flame 32 and/or thermal plasma, whereby the vitrified form will be maintained. Here, in the case of the flame 32, the center temperature is about 2,000°C in the case of oxygen combustion, and in the case of the thermal plasma, the temperature is from 5,000 to 20,000°C.

The average particle size of the glass material particles is preferably from 30 to 1,000 pom, more preferably from 50 to 500 µm, further preferably from 70 to 300 µm. With the glass material particles, in many cases, the initial average particle size decreases about 80% when they become liquid glass particles in the first gas phase zone.

The second heating unit 20 comprises a glass cullet pieces-introducing tube (an inlet for glass cullet pieces) 34 and two oxygen combustion burners 36 and 36 as a second heating means. Two flames 42 and 42 formed by the two oxygen combustion burners 36 and 36 and a high temperature region around them become a second gas phase zone.

The glass cullet pieces-introducing tube 34 is disposed in a vertical direction through the ceiling wall 14, and glass cullet pieces 26, 26 ··· are introduced from an inlet 38 formed at its lower end. To this glass cullet pieces-introducing tube 34, a cullet transporting system (not shown) to transport the glass cullet pieces 26, 26 ··· by gas transportation or mechanical transportation, is connected, and the glass cullet pieces 26, 26 ··· having the after-mentioned size are transported to the glass cullet pieces-introducing tube 34. Further, the material for the glass cullet pieces-introducing tube 34 may, for example, be water-cooled metal or ceramics.

The oxygen combustion burner 36 is an oxygen combustion burner known as an oxygen combustion heating burner and having fuel and assisting gas supply nozzles properly disposed. From a nozzle 40 of the oxygen combustion burner 36, a flame 42 is ejected obliquely downward to blow the flame 42 to the falling glass cullet pieces 26, 26 ···, whereby the glass cullet pieces 26, 26 ··· are certainly heated. The glass cullet pieces 26 are heated by the flame 42 to a level of from 1,000 to 1,800°C, although the temperature may depend also on the amount, etc. of the glass cullet pieces 26 introduced, and landed on glass melt G. Although not shown in the drawings, to this oxygen combustion burner 36, a fuel supply system to supply a fuel to the fuel supply nozzle and a gas supply system to supply an assisting gas to a combustion assisting gas supply nozzle, are connected.

Further, the second heating unit may be formed on an upper side wall of the glass melting furnace instead of on the ceiling within a range of the present invention. In a case where the second heating unit is to be formed on a side wall, it is formed at a height of up to 1 m in a vertical direction from the inner wall of the ceiling of the glass melting furnace. That is, if the second heating unit is formed at a position exceeding 1 m in a vertical direction from the inner wall of the ceiling of the glass melting furnace, its vertical distance from the glass melt surface becomes too short, and the angle to the horizontal direction becomes small, and the glass cullet pieces are obliged to be blown to the opposite wall surface, thus leading to damages and corrosion of the furnace wall and accompanying glass contamination. The second heating unit is preferably formed at a height up to 80 cm, more preferably formed at a height of up to 60 cm, in a vertical direction from the inner wall of the ceiling of the glass melting furnace.

Here, in the present invention, "glass cullet" means a glass cullet having substantially the same glass composition as glass of a glass product being the final object in the present invention. Such a glass cullet is usually generated in a step of producing a glass product being the final object, from glass melt formed at the furnace bottom in the present invention. However, the glass cullet is not limited thereto and may be a glass cullet generated from a step for producing other glass products made of substantially the same glass composition as glass of a glass product being the final object of the present invention, a glass cullet to be formed from a step of using the glass product as the final object obtained by the present invention, or the like. The glass melting furnace in the above-mentioned step for producing other glass products is not limited to a glass melting furnace employing an in-flight melting method. Since the glass composition of the glass cullet is substantially the same as the glass composition of glass to be formed from glass material particles, the glass composition of glass melt obtained by mixing liquid glass having glass cullet pieces melted and liquid glass formed from glass material particles becomes homogeneous, and a heat energy required for homogenization is small, and the time required for the homogenization is also short. It is preferred that the glass composition of the glass cullet and the glass composition of the liquid glass particles formed from glass material particles are the same, but the glass composition may lightly change during a period when the glass melt formed at the furnace bottom of the melting tank becomes a glass product (for example, due to evaporation of a volatile glass component such as boron oxide), and such a slight difference in the glass composition is allowable. Further, since the glass cullet pieces are made of a substance which is already glass, the heated glass cullet pieces simply melt to form liquid glass particles. On the other hand, the glass material particles are converted to liquid glass particles by a chemical reaction such as thermal decomposition of glass material (for example, thermal decomposition of a metal carbonate to a metal oxide), or a reaction and melting of a vitrifying component, so-called a vitrification reaction. The mechanism for conversion of the solid particles to the liquid glass particles is different between the glass material particles and the glass cullet pieces, but the liquid glass particles to be formed are liquid glass particles having substantially the same glass composition.

Further, the oxygen combustion burners 36 and 36 are disposed at a prescribed distance to have the glass cullet pieces-introducing tube 34 interposed. That is, around the glass cullet pieces-introducing tube 34, nozzles 40 and 40 of the oxygen combustion burners 36 and 36 are disposed.

Further, the oxygen combustion burners 36 and 36 are disposed as inclined so that the angle (θ) of the flame direction (b) becomes 1°≦θ≦75° to the cullet pieces-introducing axis (O₁) of the glass cullet pieces-introducing tube 34. Thus, an oxygen combustion burner 36 is disposed at an angle of 1°≦θ≦75° to the cullet pieces-introducing axis (O₁) so that it blows the flame 42 towards the cullet pieces-introducing axis (O₁) being a vertical axis, whereby glass cullet pieces 26, 26 ··· falling along the cullet pieces-introducing axis (O₁) from the glass cullet pieces-introducing tube 34 will efficiently pass through the flame 42. Here, a horizontal distance between the nozzle 40 at the forward end of the oxygen combustion burner 36 and the inlet 38 of the glass cullet pieces-introducing tube 34, is suitably set depending upon the ability of the oxygen combustion burner 36 and the purpose for efficiently passing the falling glass cullet pieces 26, 26 ··· in the flame 42. For example, the oxygen combustion burner 36 is more preferably set at an angle of 10°≦θ≦30° to the cullet pieces-introducing axis (O₁) in a case where the falling height of the glass cullet pieces 26 can be made to be from 1 to 3 m. It is thereby possible to expose the glass cullet pieces 26 to the flame 42 of the oxygen combustion burner 36 for a longer time, whereby a larger portion of the glass cullet pieces 26 can be melted.

Further, in the same manner as the oxygen combustion burner 28, instead of the oxygen combustion burner 36, a multiphase arc plasma generator constituted by at least one pair of electrodes to generate a thermal plasma may be set on a wall surface of the melting tank 12. Further, both the oxygen combustion burner 36 and the multiphase arc plasma generator may be provided in the melting tank 12. The temperature of the flame 42 of the oxygen combustion burner 36 and the temperature of the thermal plasma, are the same as the above-mentioned temperatures.

Further, an enclosure formation to enclose the first gas phase zone with the flue 16 at the center, by the flow of many glass cullet pieces 26, 26 ··· dropped from the glass cullet pieces-introducing tubes 34, 34 ··· is formed. Such a flow of the glass cullet pieces is formed substantially cylindrically with the center axis in a vertical direction and thus has a function to partition the furnace wall 44 of the melting tank 12 from the floating particles 24, 24 ···.

Now, the function of the apparatus for producing molten glass constructed as described above, will be described.

The glass melting furnace in this embodiment is a melting furnace to melt glass material particles. The first gas phase zone is the flames 32, 32 ··· formed by eight oxygen combustion burners 28, 28 ··· and high temperature regions formed around them, and glass material particles are converted to liquid glass particles in this first gas phase zone. That is, glass material particles are introduced from the oxygen combustion burners 28, 28 ··· into the furnace, and the glass material particles, etc. 22 descending in the flames 32, 32 ··· are heated and melted to form liquid glass particles. The liquid glass particles formed from the glass material particles via glass material particles, etc. 22, 22 ···, fall downward and collected at the furnace bottom 60 to form glass melt G, and the glass melt G is temporarily retained at the furnace bottom 60.

It is not essential that liquid glass particles reach the furnace bottom 60 or the surface of glass melt G in the form of individual particles. The liquid glass particles may land on the furnace bottom 60 or on the surface of the glass melt G after two or more of them are fused in the gas phase.

At the time of heating and melting of such glass material particles, some of glass material particles, etc. 22, 22 becomes floating particles 24, 24 ···, and such floating particles 24, 24 ··· scatter from the first gas phase zone and float in the furnace in the conventional technique.

Therefore, in the melting tank 12 in this embodiment, the flue 16 is disposed substantially at the center of the ceiling wall 14, and around this flue 16, eight first heating units 18, 18 ··· are disposed. Therefore, floating particles 24, 24 ··· in the furnace are, without heading to the surrounding furnace wall 44, suctioned by the suction power of the flue 16 and discharged and removed out of the furnace.

Accordingly, by this melting tank 12, the deposition amount of floating particles 24, 24 ··· deposited on the furnace wall 44 is drastically reduced, whereby it is possible to prevent damages to the furnace wall and deterioration of the quality of glass melt G, caused by deposition of the floating particles 24, 24 ··· on the furnace wall 44.

Further, in this melting tank 12, at the same time as introducing glass material particles, glass cullet pieces 26, 26 ··· are dropped from eight glass cullet pieces-introducing tubes 34, 34 ··· to form in the furnace an enclosure formation by a substantially cylindrical flow of glass cullet pieces with the flue 16 at the center. That is, to enclose floating particles 24, 24 ···, glass cullet pieces 26, 26 ··· are permitted to fall from eight glass cullet pieces-introducing tubes 34, 34 ··· to partition off the furnace wall 44 from floating particles 24, 24 ···. And, some of floating particles 24, 24 ··· directed to the furnace wall 44 are captured as deposited on the surface of the falling glass cullet pieces 26, 26 ··· and then dropped on the glass melt G in the melting tank 12.

Thus, according to this melting tank 12, it is possible to prevent scattering of floating particles 24, 24 ··· to the furnace wall 44 by such an enclosure formation, and it is possible to certainly prevent deposition of the floating particles 24, 24 ··· on the furnace wall 44.

On the other hand, with respect to the glass cullet pieces to be introduced from the glass cullet pieces-introducing tubes 34, 34 ···, their particle size is preferably defined in order to introduce them to the cullet pieces-introducing tubes 34, 34 ··· taking into consideration low possibility of scattering of the cullet pieces themselves and in consideration of the efficiency in handling from the viewpoint of the recovery of the cullet pieces in the glass production step or from the market, their storage or transportation to the inlets for glass cullet pieces. With respect to the particle size of the glass cullet pieces, their short diameter (a) is preferably 0.1 mm<a<50 mm. The glass cullet pieces having such a short diameter (a) are preferably ones which remain on a sieve having a mesh opening size of 0.1 mm and which pass through a sieve having a mesh opening size of 50 mm. The short diameter (a) of glass cullet pieces is more preferably 5 mm<a<20 mm from the viewpoint of the prevention of scattering or handling efficiency of the glass cullet pieces. Further, the inlet for glass cullet pieces preferably has a structure (such as the inner diameter of the introducing tube) for introducing the glass cullet pieces of this size. Further, even if the short diameter (a) becomes 50 mm or larger, there will be no change in the effect for capturing floating particles by depositing them on the surface of the falling glass cullet pieces.

In this embodiment, glass cullet pieces having such a short diameter (a) are introduced from the glass cullet pieces-introducing tubes 34, 34 ··· into the furnace, and the falling glass cullet pieces 26, 26 ··· are heated by the flames 42 and 42 of the oxygen combustion burners 36 and 36. The heated glass cullet pieces 26, 26 ··· will fall downward.

The glass cullet pieces are heated by the second heating unit to form glass particles having at least their surface liquefied, and two or more of such glass particles may be fused to one another before they reach the surface of glass melt G, so that fused liquid glass particles may land on the glass melt G. Since such glass particles having at least their surface liquefied are relatively large particles, the falling liquefied glass particles are likely to contact one another, and in a case where a plurality of liquefied glass particles contact one another, they may fuse to one another to form still larger liquefied agglomerates of glass particles. Further, many liquefied glass particles are integrated to form a liquid flow, which may reach the glass melt G. When the amount of glass cullet pieces introduced per unit time from one glass cullet pieces-introducing tube 34 becomes large, such melting of liquefied glass particles is more likely to occur.

Although it is ideal that the glass cullet pieces 26 can be completely melted by the oxygen combustion burner 36 during their falling, it is practically difficult to completely melt the glass cullet pieces 26, since they are far large in size as compared with fine particulate glass material particles. Therefore, non-melted glass cullet pieces 26, 26 ··· will land on the surface of the glass melt G in the furnace, and in such a case, the non-melted glass cullet pieces 26, 26 ··· will be heated and melted by the heat by the oxygen combustion burners 28 and 36 and by the radiation heat from the furnace body and become glass melt G, and therefore there is no problem.

Further, an oxygen combustion burner 36 is not one which simply preheats only glass cullet pieces 26 but heats glass material particles, etc. 22 and glass melt G in the melting tank 12 as well, and thus its function is totally different from a preheating device for glass cullet pieces installed outside the furnace.

As mentioned above, the glass cullet pieces 26 are not required to be completely liquefied in the second gas phase by the second heating unit, but by disposing a plurality of oxygen combustion burners 36, 36 ··· in this manner, it is possible to improve the melting rate of glass cullet pieces 26, and it is thereby possible to reduce the quantity of heat required for secondary heating which is necessary for homogenization of the glass melt. Further, by increasing the number of oxygen combustion burners 36, it is possible to uniformly heat glass cullet pieces 26, 26 ···, whereby the melting rate will be further improved. Further, as the number of oxygen combustion burners 36 to be used increases, the oxygen combustion burners 36 may be changed to ones of small ability type. It is thereby possible to save the fuel to be used for the oxygen combustion burners 36.

Thus, according to this melting tank 12, together with glass material particles, glass cullet pieces can be introduced into the melting tank 12 and melted, and such a melting tank is suitable for a large scale melting furnace which is suitable for production of a glass product at a production rate of a few tens tons/day or a few hundreds tons/day.

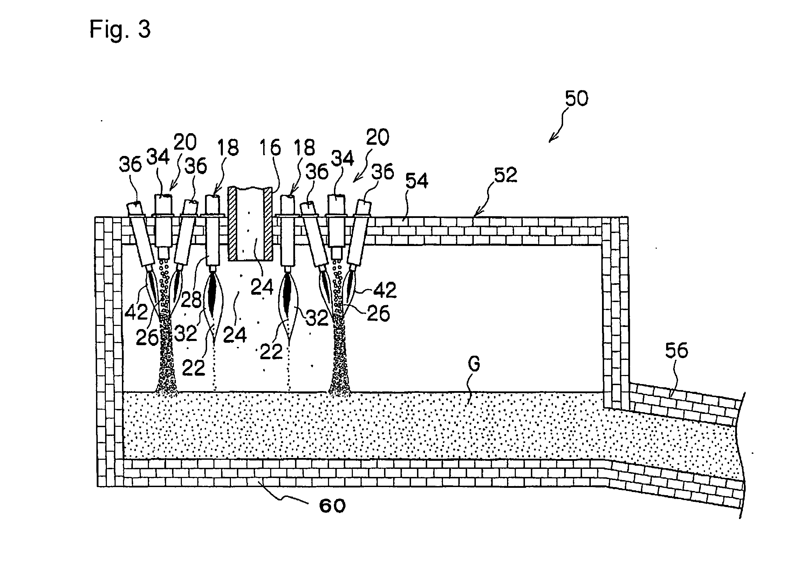

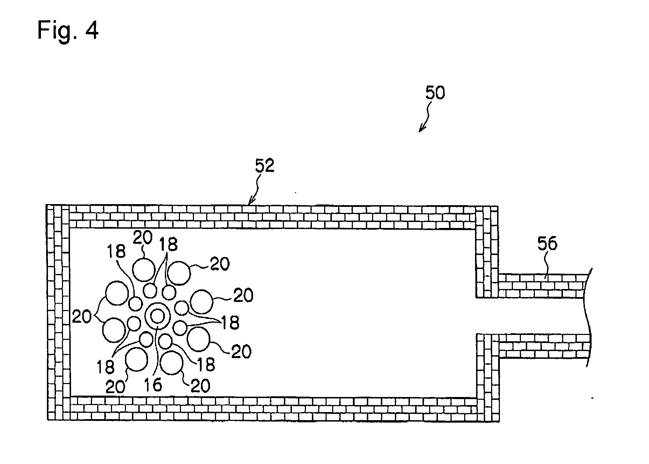

Fig. 3 is a vertical cross-sectional view of a glass melting furnace 50 in a second embodiment to constitute the apparatus for producing a glass product of the present invention, and Fig. 4 is a sectional plan view of the main part excluding the ceiling portion of the glass melting furnace 50. With respect to the same or similar components as in the glass melting furnace 10 shown in Figs. 1 and 2, the same reference symbols are used for their description.

A melting tank 52 of the glass melting furnace 50 is constructed to be rectangular parallelopiped, and on the ceiling wall 54 being an upper furnace wall, one flue 16, eight first heating units 18, 18 ··· and eight second heating units 20, 20 ··· are, respectively, provided downward through the ceiling wall 54. The disposition formulation of such a flue 16, first heating units 18, 18 ··· and second heating units 20, 20 ··· is the same as the formulation shown in Figs. 1 and 2.

Although this melting tank 52 is rectangular parallelopiped, the first heating units 18, 18 ··· are disposed around the flue 16, and the second heating units 20, 20 ··· are disposed to enclose the first heating units 18, 18 ···, whereby it is possible to obtain the same effects as in the case of the glass melting furnace 10 shown in Figs. 1 and 2. Here, the reference symbol 56 in Figs. 3 and 4 represents an outlet, and glass melt G melted by the melting tank 52 is supplied to the downstream side via the outlet 56. Thus, the melting unit comprising the flue 16, the first heating units 18, 18 ··· and the second heating units 20, 20 ···, is disposed on the upstream side of the glass melt G in the melting tank 52, but the disposition position is not limited thereto, and it may be disposed on the intermediate stream side, on the downstream side or over the entire region. Further, a plurality of melting units may be provided on the ceiling wall 54.

Further, in these embodiments, the glass melting furnaces 10 and 50 provided with the second heating units 20 are exemplified, but the present invention may be applied also to a glass melting furnace provided only with the glass cullet pieces-introducing tubes 34 and not provided with an oxygen burner as a heating means to form a gas phase.

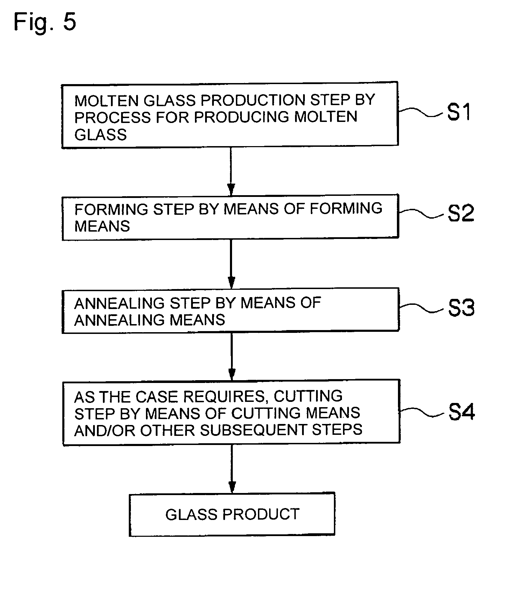

Fig. 5 is a flow chart showing an embodiment of the process for producing a glass product. Fig. 5 shows in addition to a melting glass production step (S1), a forming step (S2) by means of a forming means and an annealing step (S3) by means of an annealing means, as constituting elements of the process for producing a glass product, a cutting step and other subsequent steps (S4) which are employed as the case requires.

A glass melt G melted in any one of the melting tanks 12 and 52 in Figs. 1 to 4, is sent to a forming means via an outlet and a conduit structure not shown and then formed (forming step). The glass after the forming is annealed by means of an annealing means so that no residual stress will remain in the core of the glass solidified after the forming (annealing step) and further, as the case requires, cut (cutting step) and via other subsequent steps, formed into a glass product.

For example, in the case of a plate glass, a glass melt G is formed into a glass ribbon by a forming means, and the glass ribbon is annealed by an annealing means and then cut into a desired size and, as the case requires, subjected to post processing such as polishing the glass edges to obtain a plate glass.

Molten glass to be produced by the process for producing molten glass of the present invention is not particularly limited with respect to the composition so long as it is molten glass produced by an in-flight melting method. Thus, it may be soda lime glass or borosilicate glass. Further, applications of the glass product produced are not limited for buildings or vehicles, and various applications to flat panel display or others may be mentioned.

In the case of soda lime glass to be used for a plate glass for buildings or vehicles, it preferably has a composition which comprises, as represented by mass percentage based on oxides, from 65 to 75 % of SiO₂ from 0 to 3% of Al₂O₃, from 5 to 15% of CaO, from 0 to 15% of MgO, from 10 to 20% of Na₂O, from 0 to 3% of K₂O from 0 to 5% of Li₂O, from 0 to 3% of Fe₂O₃, from 0 to 5% of TiO₂, from 0 to 3% of CeO₂, from 0 to 5% of BaO, from 0 to 5% of SrO, from 0 to 5% of B₂O₃, from 0 to 5% of ZnO, from 0 to 5% of ZrO₂, from 0 to 3% of SnO₂, and from 0 to 0.5% of SO₃.

In the case of alkali-free glass to be used for substrates for liquid crystal display or organic EL display, it preferably has a composition which comprises, as represented by mass percentage based on oxides, from 39 to 70% of SiO₂ from 3 to 25% of Al₂O₃, from 1 to 20% of B₂O₃, from 0 to 10% of MgO, from 0 to 17% of CaO, from 0 to 20% of SrO, and from 0 to 30% of BaO.

In the case of mixed alkali type glass to be used for substrates for plasma display, it preferably has a composition which comprises, as represented by mass percentage based on oxides, from 50 to 75% of SiO₂, from 0 to 15% of Al₂O₃, from 6 to 24% of MgO+CaO+SrO+BaO+ZnO, and from 6 to 24% of Na₂O+K₂O.

In the case of borosilicate glass to be used for other applications e.g. heat resistant containers or laboratory instruments, it preferably has a composition which comprises, as represented by mass percentage based on oxides, from 60 to 85% of SiO₂, from 0 to 5% of Al₂O₃, from 5 to 20% of B₂O₃, and from 2 to 10% of Na₂O+K₂O.

In this embodiment, the first heating units and glass cullet pieces-introducing tubes are described to be disposed vertically downward but the disposition is not limited thereto, and they may be inclined so long as directed downward.

In this embodiment, both the first heating units and the glass cullet pieces-introducing tubes are described as installed at the ceiling of the glass melting furnace, but their position is not limited thereto, so long as both are located at an upper furnace wall of the glass melting furnace. For example, the first heating units may be installed on the ceiling of the glass melting furnace, and the glass cullet pieces-introducing tubes may be installed on a side wall of the glass melting furnace.

In this embodiment, the flue is described as only one flue is provided, but the present invention is not limited thereto, and a plurality of flues may be provided at the position where the one flue is provided, and they may be disposed to show the same exhaust gas removing effect as in the case of the one flue.

In this embodiment, the ceiling surface of the glass melting furnace is described as having a flat shape, but the ceiling surface is not limited thereto and may be, for example, arched or domed.

Further, in this embodiment, a case where glass cullet pieces and glass material particles are used in combination to produce molten glass, is described, but it is not essential to use the glass cullet pieces in combination, and molten glass may be produced only from the glass material particles. Further, in the case of using glass cullet pieces in combination, in this embodiment, a case of using a second heating means to heat the glass cullet pieces introduced, is described, but it is not essential to use the second heating means (and to form the second gas phase zone to be thereby formed). That is, without employing a special construction to heat glass cullet pieces introduced into the furnace and falling in the gas phase, glass cullet pieces may be introduced into glass melt formed from the glass material particles and melted. In such a case, if there is such a trouble that the temperature of the glass melt decreases, it is possible to solve the deficiency of the thermal energy by adopting a means to heat the glass melt.

Further, in this embodiment, a glass melting furnace is described which has only one combination comprising a flue, a plurality of first heating units and optional second heating units, but a plurality of such combinations may be provided in a glass melting furnace. For example, in Figs. 3 and 4, the glass melting furnace 50 has only one combination comprising the flue 16, the plurality of first heating units 18, 18 ··· and second heating units 20, 20 ···, but two or more such combinations may be provided in the glass melting furnace.

### INDUSTRIAL APPLICABILITY

The molten glass produced by the present invention is formed into glass products of various shapes by means of various forming means such as a float bath, a fusion forming machine, a roll out forming machine, a blow forming machine, a press molding machine, etc.

The entire disclosure of Japanese Patent Application No. 2009-161841 filed on July 8, 2009 including specification, claims, drawings and summary is incorporated herein by reference in its entirety.

### REFERENCE SYMBOLS

10: Glass melting furnace, 12: melting tank, 14: ceiling wall, 16: flue, 17: cooling device, 18: first heating unit (inlets for glass material particles and heating means to form a first gas phase zone), 19: dust collector, 20: second heating unit (inlet for glass cullet pieces and heating means for forming second gas phase), 21: suction fan, 22: glass material particles, etc. in the first gas phase zone, 23: gas supply section, 24: floating particles, 25: exhaust gas system, 26: glass cullet pieces in the second gas phase zone, 28: oxygen combustion burner, 30: nozzle, 32: flame, 34: glass cullet pieces-introducing tube, 36: oxygen combustion burner, 38: inlet, 40: nozzle, 42: flame, 44: furnace wall, 50: glass melting furnace, 52: melting tank, 54: ceiling wall, 56: outlet, 60: furnace bottom

## Claims

1. A glass melting furnace for converting glass material particles to liquid glass particles in a gas phase atmosphere in the glass melting furnace, collecting the liquid glass particles at a bottom of the glass melting furnace to form a glass melt and discharging the glass melt, which comprises:
a flue formed through a ceiling of the glass melting furnace,
a plurality of inlets for glass material particles provided downward on an upper furnace wall in the glass melting furnace and disposed around the flue in a planar view,
a heating means formed for every one of the plurality of inlets for glass material particles, to form a gas phase zone below the inlets for glass material particles, to convert the glass material particles to liquid glass particles,
a furnace bottom to collect the liquid glass particles to form a glass melt, and
a discharge outlet to discharge the glass melt.

2. The glass melting furnace according to Claim 1, wherein in a planar view, the plurality of inlets for glass material particles are disposed concentrically with the flue at the center.

3. The glass melting furnace according to Claim 1 or 2, wherein the heating means is at least one of an oxygen combustion burner to generate an oxygen combustion flame and a multiphase arc plasma generator constituted by at least one pair of electrodes to generate thermal plasma.

4. The glass melting furnace according to any one of Claims 1 to 3, which is constructed to have a substantially cylindrical shape with its central axis in a vertical direction, wherein in a planar view, the flue is formed substantially at its center.

5. The glass melting furnace according to any one of Claims 1 to 4, which is provided with a plurality of inlets for glass cullet pieces to introduce glass cullet pieces, provided downward on the furnace wall of the glass melting furnace and disposed at prescribed distances to enclose the entirety of the plurality of inlets for glass material particles.

6. The glass melting furnace according to Claim 5, wherein in a planar view, the plurality of inlets for glass cullet pieces are disposed concentrically with the flue at the center.

7. The glass melting furnace according to Claim 5 or 6, wherein the inlets for glass cullet pieces are provided to introduce glass cullet pieces having a short diameter (a) being 0.1 mm<a<50 mm.

8. The glass melting furnace according to Claim 7, wherein the glass cullet pieces having the above short diameter (a) are ones which remain on a sieve with a mesh opening size of 0.1 mm and pass through a sieve with a mesh opening size of 50mm.

9. The glass melting furnace according to any one of Claims 5 to 8, which is provided with a heating means below the inlets for glass cullet pieces to form a gas phase zone to convert glass cullet pieces to glass particles having at least their surface liquefied.

10. The glass melting furnace according to any one of Claims 5 to 9, wherein a gas supply section is provided to supply a part of exhaust gas from the flue to glass cullet pieces prior to being introduced from the inlets for glass cullet pieces, to preheat the glass cullet pieces.

11. A process for producing molten glass, which comprises producing molten glass by means of the glass melting furnace as defined in any one of Claims 1 to 10.

12. An apparatus for producing a glass product, which comprises the glass melting furnace as defined in any one of Claims 1 to 10, a forming means for forming molten glass, installed on a downstream side of the discharge outlet of the glass melting furnace, and an annealing means to anneal glass after the forming.

13. A process for producing a glass product, which comprises a step of producing molten glass by the process for producing molten glass as defined in Claim 11, a step of forming the molten glass, and a step of annealing glass after the forming.
